# EUROPEAN PATENT APPLICATION

(11) **EP 4 113 304 A1**
(43) Date of publication of application: **04.01.2023**
(21) Application number: 21182331.5
(22) Date of filing: 29.06.2021
(51) Int. Cl.: G06F 9/54

(54) **WORK QUEUE FOR COMMUNICATION BETWEEN A PRODUCER AND A CONSUMER**

(71) Applicant: Microsoft Technology Licensing, LLC, Redmond, WA 98052-6399 (US)
(72) Inventor: DRAGOJEVIC, Aleksandar, Redmond, 98052-6399 (US); LIU, Junyi, Redmond, 98052-6399 (US)
(74) Representative: Townsend, Martyn

(57) **Abstract**

A system comprising: a producer of work items, a circular buffer for queueing the items, and a consumer of the items. Each slot in the buffer comprises a descriptor field and a sequence number field. The buffer also comprises a head field specifying the sequence number of the head slot, and a tail field specifying the sequence number of the tail slot. To enqueue a new item , the producer increments the tail field, and writes the new item to the slot that was the tail slot prior to the increment. The consumer tracks a next expected sequence number based on how many items it has consumed so far. To consume a next item from the work queue, the consumer polls the sequence number of the head slot to check whether it equals the expected sequence number, and on condition thereof consumes the next work item.

## Description

### Background

Work queues are used by software running on a CPU to post work items to hardware components in the system, e.g. network cards, SSDs, etc. A work queue is typically stored in a buffer implemented in system memory and is read by the hardware component over a bus such as a PCIe connection. These buses can be used to talk with both on-chip and off-chip components. To post a work item, the software inserts a work queue entry into the work queue and then sends a signal to the hardware component over PCIe, to inform it that an entry is available. The hardware component then reads items from the queue, marks the entries in the work-queue empty, and executes the work. It signals to the software that the work is completed using a different mechanism.

The software on the CPU can also send a notification about multiple new items to the hardware at once, in order to reduce the overheads of PCIe communication which is expensive compared to accessing system memory. Main memory is typically directly attached to the CPU (the producer), e.g. via a DDR (Double Data Rate) interface integrated into the memory (e.g. DRAM); whereas the consumer typically must access the main memory via the system bus (e.g. via a PCIe root complex, nowadays usually integrated inside CPU). Therefore communication between the consumer and the system memory is typically slower than between the producer and the memory.

### Summary

Even with the CPU able to notify of multiple new items at once, the overhead of this notification over PCIe or such is still not necessarily negligible. E.g. modern I/O devices can perform millions of operations per second. With millions of I/O operations issued per second, the CPU overheads of posting work queue items become significant. The following discloses a new work queue design that reduces the overheads of a producer (e.g. CPU) posting items compared to traditional work queues. The disclosed work queue allows the producer to post requests to the hardware component with low synchronization overheads. In embodiments multiple sender threads of the producer can post requests. The notification (e.g. via PCIe) is avoided by having the consumer (e.g. hardware component) poll over PCIe. The consumer only needs to read the slots of the queue and update a head variable, which reduces the overheads of consuming queue items.

All manufacturers of I/O devices use some form of work queues for communication with the hardware device. The disclosed scheme is particularly (but not exclusively) advantageous for high-performance scenarios in which CPU cycles spent on posting requests to I/O devices become a significant fraction of total CPU utilization, e.g. high-performance NICs and SSD devices.

According to a first aspect disclosed herein, there is provided an electronic system comprising: a producer of a sequence of work items; a circular buffer for queueing the work items produced by the producer; and a consumer of the work items from the circular buffer. The circular buffer comprises a plural number of slots for queuing the work items in a queue with one slot as a head slot and another a tail slot, each slot in the circular buffer comprising a descriptor field for holding one work item and a sequence number field for holding a corresponding sequence number indicating how many work items came before in the sequence from the producer. The circular buffer further comprises a head field arranged to hold a head sequence number specifying the sequence number of the head slot, and a tail field arranged to hold a tail sequence number specifying the sequence number of the tail slot. The producer is configured so as, in order to enqueue a new work item into the queue, to increment the tail sequence number in the tail field, and write the new work item to the slot that was the tail slot prior to the increment of the tail sequence number. The consumer is configured to track, based on how many work items in the sequence the consumer has consumed from the queue so far, a next expected sequence number being the sequence number of the work item to consume next. The consumer is further configured so as, in order to consume a next work item from the work queue, to poll the sequence number of the head slot to check whether it equals the expected sequence number, and on condition thereof consume said next work item.

As mentioned, the conventional arrangement is that the producer signals to the consumer over PCIe to signal that it has written an item to the work queue for the consumer to collect. However this incurs PCIe communication overhead. It is known to batch together multiple notifications to signal multiple new items at once, but this only reduces the overhead, not eliminate the requirement for it. The reduced level of overhead is still not necessarily negligible. E.g. this mechanism is still not very helpful small-size transfers, where the time spent on actual data transfer is still small compared to the relatively long time spent on PCIe notification. One would need to batch a lot of these small transfers to amortize the cost of PCIe communication.

In the present disclosure on the other hand, the circular buffer has a sequence number associated with each item in the buffer, and also a head and a tail pointer. The sequence number is the number of items inserted prior to this item, e.g. since the beginning of time. The consumer keeps track of how many items it has consumed, so knows the next expected sequence number. When it examines the next entry in the queue after the one it has just consumed, it checks whether the sequence number of that item equals the expected sequence number. If not, it is not ready to consume, but if so then it is. Because the consumer polls the buffer, and only needs to read the sequence number associated with the item in order to determine whether an item is ready to be consumed, then the producer does not need to separately signal to the consumer to let it know when items are ready (whether via PCIe or any other means).

In embodiments the queue can be used for communication between multiple threads on a host and a hardware component, but more generally the same queue could be used for any producer-consumer scenarios, including scenarios where the "producer" is in fact multiple producing entities (e.g. multiple threads, cores or CPUs).

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein.

### Brief Description of the Drawings

To assist understanding of the present disclosure and to show how embodiments may be put into effect, reference is made by way of example to the accompanying drawings in which:
Figure 1 is a schematic block diagram of a system with a work queue between a producer and consumer,
Figure 2 is a schematic block diagram showing an example implementation of the system of Figure 1,
Figure 3 is a schematic representation of a work queue in accordance with embodiments disclosed herein,
Figure 4 is a schematic flow chart showing a method that may be performed by a producer in accordance with embodiments disclosed herein, and
Figure 5 is a schematic flow chart showing a method that may be performed by a consumer in accordance with embodiments disclosed herein.

### Detailed Description

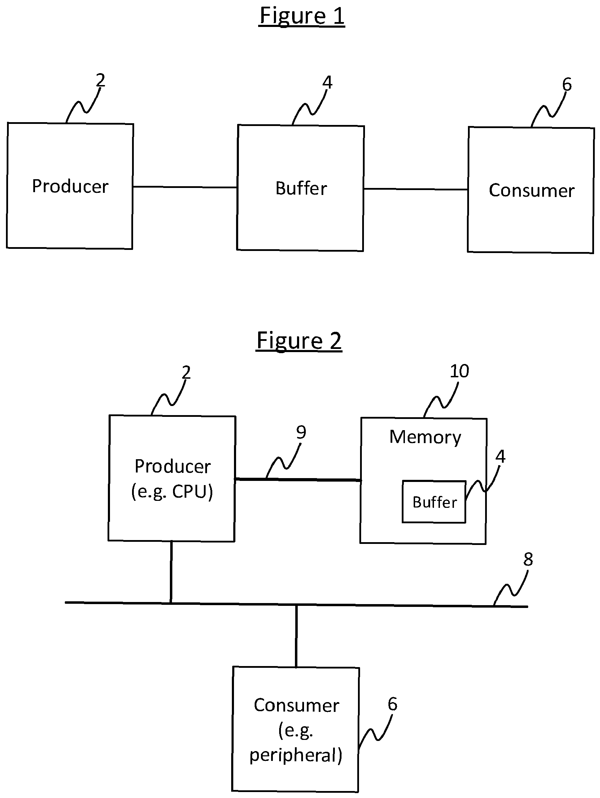

Figure 1 is a schematic block diagram of a system in accordance with the present disclosure. The system comprises: a producer 2, a buffer 4, and a consumer 6. An output of the producer 2 is operatively coupled to an input of the buffer 4, and an output of the buffer 4 is operatively coupled to an input of the consumer 6. The producer 2 is configured to produce a sequence of work items via its output, and to send them to the input of the buffer to be enqueued at the tail of a work queue held in the buffer 4. The consumer 6 is configured to read work items from the head of the work queue, via the output of the buffer 4 and input of the consumer 6, and to service those work items.

Note that in the terminology adopted herein, the head of a queue refers to the front of the queue, i.e. the next entry to be serviced by the consumer; and the tail of the queue refers to the back of the queue, i.e. the last that will be serviced from amongst those entries presently in the queue.

In embodiments, the producer 2 may comprise one or more processors. Any such processor may take the form of, for example: a general purpose processor such as CPU (central processing unit); or an application specific or accelerator processor such as a GPU (graphics processing unit), digital signal processor (DSP), cryptoprocessor, or Al accelerator processor. In other embodiments the producer 2 may comprise one or more dedicated hardware circuits or devices such as one or more ASICs (application specific integrated circuits), or one or more configurable pieces of hardware such as one or more PGAs (programmable gate arrays) or FPGAs (field programmable gate arrays).

The producer 2 may comprise one or more producing entities, each able to independently produce one or more respective work items and enqueue them in the same work queue held buffer 4. In the case of multiple producing entities, these may comprise for example multiple threads run on the same processor, or multiple cores of the same processor, multiple processors, or multiple other devices, or any combination of different threads, processes, cores, processors and/or hardware devices. The multiple producing entities may be implemented on the same integrated circuit (ICs) as one another, or different ICs on the same board or in the same housing, or as devices in separate housings, or any combination of these.

Each work item takes the form of a portion of data comprising a work descriptor, specifying a task to be performed by the consumer 6, e.g. to send data over a network in the case of a NIC, or to store a piece of data content in the case of a SSD. The descriptor may comprise a pointer to data located elsewhere in memory (whether in the same memory 10 as the buffer or other memory), which is the target data to be processed by the task in question.

In embodiments the buffer 4 is implemented as a data structure in general purpose memory, e.g. system memory of the CPU in the case where the producer 2 comprises a CPU. The memory may comprise any one or more memory media; e.g. an electronic or silicon medium such as EEPROM (electrically erasable and programmable ROM), flash memory, and/or dynamic or static RAM (random access memory); a magnetic medium such as a magnetic tape or disk; or even a rewritable optical medium. Whatever medium or media is/are used, the memory may be embodied in any one or more memory devices, e.g. an internal memory of the CPU or other such processor, or an external memory module on the same integrated circuit, or an external memory device such as a memory chip on the same board, or a SSD (solid state drive) or magnetic drive.

In alternative embodiments it is not excluded that the buffer 4 could be implemented in dedicated hardware circuitry, or in configurable or reconfigurable circuitry such as a PGA or FPGA; or even a combination of hardware and general purpose memory.

In embodiments, the consumer 6 takes the form of a hardware peripheral, e.g. a NIC (network interface card), or a SSD (solid state drive). Alternatively the consumer 6 could take the form of another processor, e.g. a slave or accelerator processor of the producer 2, such as a GPU, DSP, cryptoprocessor or Al accelerator processor. As another possibility the consumer 6 could comprise a PGA or FPGA, or any combination of one or more hardware devices, processors, and/or any other dedicated, configurable or programmable circuits. The consumer 6 could comprise one or more consuming entities, e.g. different hardware devices or circuits within a device, different threads or processes on the same processor, different cores on the same processor, or different processors, or any combination of these.

In the case where the producer 2 comprises one or more processors, the operations described herein of the producer 2 may be performed by software stored in a memory associated with the processor(s) and arranged to run on the processor(s) of the producer 2. A similar statement may be made, mutatis mutandis, in relation to the consumer 6. In such cases, the memory storing the software of the producer 2 could be implemented in the same memory medium and/or device as that in which the buffer 4 and/or the software of the consumer 6 is/are implemented, or a different memory medium or device, or a combination. Similarly, if the consumer 6 comprises any processor, the memory storing the software of the consumer 6 could be implemented in the same memory medium and/or device as that in which the buffer 4 and/or the software of the producer 2 is/are implemented, or a different memory medium or device, or a combination. Such memory may be implemented in any of the types of medium and/or device as discussed previously, e.g. EEPROM, flash memory, SRAM or DRAM, SSD, magnetic drive or quartz glass; or indeed any other type such as a silicon ROM, magnetic tape, CD ROM, quartz glass, or even a synthetic biological memory, etc.

Figure 2 shows a particular example of a system in which the producer 2, consumer 6 and buffer 4 may be embodied. Here the producer 2 takes the form of a processor such as a CPU; and the consumer 6 takes the form of a peripheral (e.g. NIC or SSD), or a slave processor or accelerator processor (e.g. GPU, cryptoprocessor or Al accelerator). In such situations the producer 2 could also be described as a host. The producer 2 and consumer 6 are connected to one another via a bus 8, e.g. a PCI (Peripheral Component Interface) bus such as a PCIe bus (PCI Express). The bus 8 means that it would be expensive to signal from the producer 2 to the consumer 6, such as to signal when a work item has been posted into the queue or is ready to consume. "Expensive" here means that it would take a relatively long time, e.g. compared to a processor cycle (e.g. CPU cycle) of the producer 2 or an operational cycle of the consumer 6.

The buffer 4 is implemented in a memory 10, which could take any of the forms or rewriteable memory described earlier, e.g. SRAM, DRAM, EEPROM, etc. The memory 10 may also be connected directly or indirectly to the bus 8. In embodiments, a direct connection 9 may be provided between the producer 2 and the memory 10, e.g. in the form of a DDR (double data rate interface). The memory 10 could be internal or external to the producer 2. The memory 10 may be connected indirectly to the bus 10 via a root complex integrated into the producer 2 (e.g. CPU). In such embodiments, the producer 2 can write work items to the queue via the direct connection 9, and the consumer 6 reads work items from the queue via the bus 8 and the root complex of the producer 2. Alternatively however, in other arrangements it is not excluded that the producer 2 does not have a direct connection 9 and instead writes work items to the queue via the bus 8; and the consumer 6 reads the work items from the queue via the bus 8 and a separate, direct connection (not shown) between the bus 8 and the memory 10. Alternatively the memory 10 could be an internal memory of the producer 2, in which case the producer can write work items to it directly but the consumer 6 must read the items from it via the bus 8.

In the case where the producer 2 has a direct connection 9 and the memory is integrated on-chip, then the producer 2 accessing memory 10 is much faster because all bus transfer happens on the chip. If the consumer 6 is off-chip, then it must communicate via an external bus such as a PCIe bus, which is slower as it needs to go over the external wires through a set of transceivers. The sender transceivers convert digital signals into analogue signals sent over the wires, and the receiver transceivers converts the analogue signals back into the digital domain. This process requires a lot of digital signal processing and analogue circuit processing, which is why the external consumer communication takes much longer latency and has bandwidth limitation.

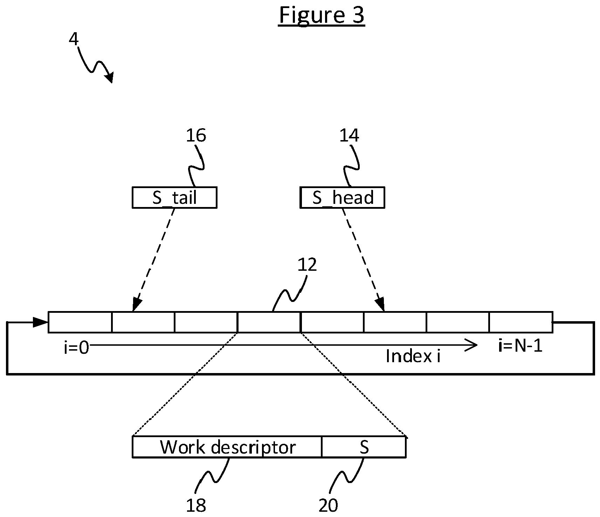

Figure 3 schematically illustrates the structure of the buffer 4, by whatever physical means it is implemented and in whatever form of system. E.g. in embodiments the structure shown in Figure 3 is implemented as a data structure in memory, e.g. the system memory 10 of Figure 2.

The buffer 4 takes the form of a circular buffer comprising a series of N = x^2 entries 12, or "slots". Preferably N=x^2, where x is some integer, since power-of-two numbers are less complex to perform modulo operations on in digital binary computation. However this is not essential. The series of slots 12 is arranged to buffer work items in a wrap-around manner. Each slot 12 has a respective index i. The length N of the buffer 4 may for example be between sixteen and 128 entries, depending on the configuration and workload requirements. The buffer size may be static, at least in that it does not change during a given run, and may be set to a value that achieves good performance for a particular application. In some cases the buffer size could be set to a new size at runtime when starting a new queue, for example.

Each slot 12 comprises a respective descriptor field 18 for holding the work item posted by the producer 2. As mentioned each work item comprises a work descriptor, and the work descriptor is specific to the work item that is being posted. In embodiments the descriptor field of each slot (entry) 12 may be for example, sixty-four bytes long. In embodiments the descriptor fields 18 are padded to their full length, e.g. to 64 bytes, to avoid false sharing on the CPU.

In addition to the work descriptor field 18, each slot 12 further comprises a sequence field 20. This is for holding a sequence value of the respective work item posted to the respective slot 12. The sequence value is a distinct concept from the index of the slot 12. It specifies the number of work items that have come before the respective work item in the sequence posted to the queue by the producer 2. In embodiments this is the number of items that have been posted ever, since the beginning of time. Alternatively it could be the number since some other point in time, e.g. if the system has been completely cleared and reset at some point. Either way, the sequence number may become larger than the number N of slots 12 available in the buffer 4. The sequence field 20 is preferably long enough to accommodate an effectively infinite range of possible sequence values. E.g. in embodiments, the sequence field 20 is 8 bytes long, giving 2^64 possible sequence values, which would never be exhausted in a lifetime.

In addition to the circular series of slots 12, the circular buffer 4 also comprises two fields for specifying the head and tail of the current queue being held in the buffer 4: a head field 14 arranged to hold a head sequence number S_head, and a tail field arranged to hold a tail sequence number S_tail. These have the same size as the sequence field 20. In embodiments, these fields act as pointers to the slots at the current head and tail of the queue: the index i of the head slot is simply determined by S_head % N (the head sequence number modulo the buffer length) and the index i of the tail slot is determined by S_tail % N (the tail sequence number modulo the buffer length). An alternative would be to have a separate tail slot pointer field that maps the tail sequence number to the tail slot, and a head pointer field that maps the head sequence number to the head slot. This possibility is not excluded, but it would add unnecessary extra fields to the buffer 4. On the other hand this approach may be more convenient in order to avoid the complexity of implementing a modulo if the queue-length is not a power of 2 (a modulo is less complex to implement if the queue length is a power of 2). The following embodiments will be described below using the modulo technique, but in any of the described steps where it is required to determine the head or tail slot, this could instead be replaced with the use of a head or tail slot pointer field respectively.

The tail sequence number in the tail field 16 points to the slot 12 where the producer 2 is enqueuing new requests. It is accessed only by the producer 2. The head sequence number in the head field 14 points to the next location to dequeue onto the consumer 6. It is updated by the consumer 6 and read by the producer 2.

Using the disclosed scheme, a work queue can be shared by several threads run on the producer 2. This allows reducing the number of work queues that the consumer 6 polls.

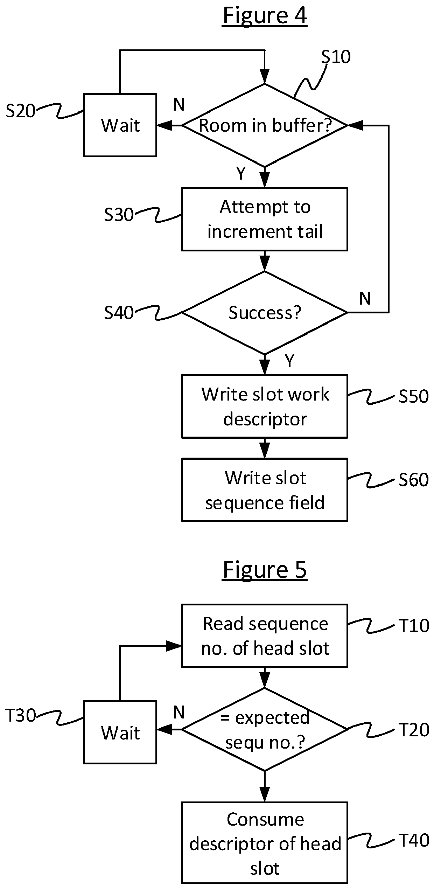

Figure 4 shows the method which the producer 2 is configured to perform in order to enqueue a work item. The following will be described with reference to a thread from amongst a plurality of threads run on the producer 2. However, anywhere below this may be generalized to any producing entity which may be a stand-alone entity or one of a plurality of producing entities of the overall producing subsystem 2.

At step S10, a thread first checks whether there is room in the buffer 4. This is done by comparing the head and tail sequence numbers. If S_head + N > S_tail (i.e. S_tail - S_head < N) then there is room in the buffer 4. If not, the method branches to step S20 where the producer 2 waits and then loops back to S10 to try again. It could perform one or more other tasks while waiting. The thread that tries again at the repetition of step S10 could be the same or a different thread as that which tried the first time.

If (or once) there is room in the buffer 4 for a new work item, then at step S30 the thread then attempts to increment the head sequence number S_head by one. Preferably the increment is performed by an atomic operation, i.e. an indivisible operation which means that another thread or process cannot attempt to operate on the buffer 4 while the thread in question is performing the increment. Typically this would be implemented by single machine code instruction.

There are a number of ways an atomic increment could be performed, but one way which may be used in embodiments is a compare-and-swap instruction. This takes at least three arguments (operands): I) an address (in this case the address where the tail is stored in memory 10), II) an expected old value (which in this case will be the current sequence number of the tail S_tail based on the tail field 16), and III) a new value (in this case the incremented sequence number for the head sequence number). The compare-and-swap instruction atomically compares the expected (i.e. old) value and the value in the address, and if they are different ("failure") does nothing to the value in the specified memory address, but if they are the same ("success"), replaces the value in the address with the new value. In either case the instruction also returns the value that was previously stored in the addressed memory location as the result of the instruction, and a Boolean value to indicate whether it succeeded or failed. If it failed, the latest value found in the target memory address will be stored into the object storing the expected value.

If the increment (e.g. the compare-and-swap) succeeds, the thread has reserved the slot 12 in the queue at location S_tail(old) % N, where S_tail(old) is the sequence number of the slot that was the tail just before the increment. Reserving a slot is useful to avoid conflict if the producer 2 comprises multiple producing entities such as multiple threads, as in this example. At step S40, the thread then proceeds to initialize the descriptor field of the reserved slot in the queue with the respective work item. After that, at step S50, it updates the slot's sequence field 20 to the value of the tail before the increment. This marks the slot as ready to be consumed by the consumer 6.

If on the other hand the increment (e.g. compare-and-swap) fails, this means some other thread has incremented the head (so the present thread is using the old head value as the expect value in compare-and-swap operation). In that case, this returned new head may be used to start the process again, which is to re-calculate the room in buffer first. Therefore the thread loops back to step S10 to check whether the buffer 4 is full and retries the above steps again. If the buffer 4 is full, the enqueue fails and returns the indication of failure to the caller. The caller typically stores the request an retries later. The buffer 4 should rarely be full if the queue size is suitably set to cover the worst case scenario (being full depends on the speed gap between producer and consumer and the communication latency).

The check at step S10 is optional since in other implementations a different mechanism could be used to deal with the buffer 4 filling up, e.g. an exception is raised from the buffer if the producer 2 tries to enqueue a work item when the buffer is full.

Figure 5 shows the method which the consumer 6 is configured to perform in order to dequeue the work item at the head of the queue.

At step T10, the consumer 6 only needs to read the head slot in the work queue. It reads the slot at the index S_head % N. At step T20 the consumer 6 then determines whether the sequence number in the slot's own sequence number field 20 is equal to the expected value of the head sequence number. If so, then the slot can be consumed and processed, so the consumer proceeds to step T40 where it reads the work item from the descriptor field 18 of the head slot, and services it by performing the task requested in the descriptor of the work item. If on the other hand the check at Step T20 indicated that the head slot was not yet ready to be consumed, then the method branches to step T30 where the consumer waits and then loops back to step T10 to try again. It could perform one or more other tasks while waiting.

The consumer 6 can keep track of the expected next value of the head sequence number because it knows how many work items it has consumed so far. To perform the comparison of this with the sequence number of the head slot, the consumer 6 may read the sequence number in the head field 14 to identity the head slot, then poll the sequence number from the sequence field 20 of the head slot, and compare this with the expected next value.

Note that the sequence number in the head field 14 is not necessarily always the same as the value in the slot's individual head sequence number field 20. For example consider the first send item after the initialization (see below). The head slot's sequence number will be the initialized value, and the head sequence number will be 0. Also, in the case of the consumer just getting over the last queue slot (passing a wraparound), the head slot will be back to index 0, and head sequence number will be N. If the producer just issues N items, head slot's sequence number will be 0. If the producer issues (N+1) number of items, head slot's sequence number will be N.

Once the consumer 6 has consumed a work item from the queue, it will update the new head value in the head field 14. This is not necessarily done every time when the consumer takes a new item: some embodiments (discussed later) perform batch updating of the head field. So, the consumer maintains a running head, which represents the latest change on head and is also the expected sequence number. The head field 14 in the buffer 4 (which may be implemented in memory 10 on the producer side) just gets the updates with some delay, and the update frequency may be configurable depending on the speed requirement. Overall, the running head (expected sequence number) at the consumer is essentially equivalent to the value in the head field.

Note that to avoid the risk of slots being coincidentally marked as ready to consume, the sequence numbers in the send-queue slots should preferably be set to values not equal to their index during initialization. In one implementation, the initial sequence value is set to a large number. E.g. this number may be just the queue size or the max valuer of a 64-bit number. Note that only changing sequence number at index 0 is not enough for all possible cases. If one just initializes index 0 with a large sequence value, then when index 0 is set with a valid item, it is possible that the consumer may access index 1 quite quickly and it may treat the uninitialized slot as a valid one. However such precautions are not essential and instead one could simply live with the error rate of occasionally attempting to read an invalid or unready slot. For instance, this may result in send items that are never completed, or unclaimed items in the completion queue (discussed later), but applying a timeout can mitigate such issues.

The consumer 6 increments the head sequence number S_head in the head field 14 in order to mark the consumed slot as consumed. Because the consumer 6 uses the value of the head sequence number in the head field 14 to determine whether a slot 12 is ready, it does not need to update any of the fields 18, 20 of the slot itself after consuming, meaning that consuming the slots is very efficient.

As an optional optimization, the consumer 6 may be configured to read multiple slots (e.g. four) from the work queue at once. The slots are processed in order. The consumer 6 does not need to wait for all requests in a batch to be ready (in some cases the entire batch might never become ready). It starts processing the requests as they are seen. As another optimization, the consumer 6 may perform batch updating of the head field. In this case it only updates the head sequence number S_head in the head field 14 after consuming a batch of requests (e.g. a quarter of the queue size). It will then increment the sequence value S_head in the head field 14 by n in a single increment operation, where n is the size of the batch (n > 1). This reduces the amount of communication required between the consumer 6 and the buffer 4 (e.g. over the bus 8). In general, the increment n on the head can be 1, more then 1, or even 0, and in some embodiments may vary. The optimal increment depends on how many slots in order from the batch meet the condition of their own sequence number matching the expected tail sequence number. For example, if consuming from a queue with 8 slots just after initialization, all slot sequence numbers may be initialized to be 8. There may also be an unknown number of producing threads or processes. Say for example that the read batch size is set to 4. The head starts from 0. Say then that in a first read, the first four sequence numbers of slot index 0-3 are: 0, 1, 8, 8. In this case, head will be incremented by 2.

In embodiments, the consumer 6 polls the queue regularly. As its internally stored requests are completing, it may poll the queue to get the new ones to process. In some embodiments, if there are no requests in the queue, the consumer 6 backs off and reduces the frequency of polling to reduce the overheads of polling queues when no requests are being issued. E.g. it halves the period when it finds no new requests in the queue. Conversely, the consumer 6 may increase the period between polls (e.g. additively) when new requests are found in the queues.

In some embodiments, a lazy head increment from consumer to producer may be employed in order to implement the batch updating. This means a separate view of the head sequence number is provided to the consumer and producer side, and the update of the head sequence number is not necessarily sent to the produce side every time there are some valid slots in a given batch. Instead a target head value is set. When the running head on the consumer side reaches this target value, the head update of the head is reported to the producer, and the new head target value is increased by P. This increase step size P may be a runtime configurable parameter. The benefit of this is to further reduce the communication traffic from consumer to the producer. The queue size is preferably set to be large enough to prevent the producer not to be starved.

After a work queue slot has been consumed by the consumer 6, the slot can be used to issue new requests to the consumer 6. This does not mean that the request has been completed. Requests are completed by using an external mechanism. Completion of the operation is decoupled from freeing the slot in the queue to reduce the required size of the queue and avoid dependencies among items.

In order for the consumer 6 to report completion of work items to the producer 2, the system may comprise a further buffer (not shown) for holding a completion queue. When the consumer 6 has completed a task specified by the descriptor of a work item consumed from the work queue, the consumer 6 posts a further message to the completion queue in order to report back to the producer 2 that the task has been completed. E.g. if the consumer 6 is a NIC, the message may report that the consumer 6 has now sent the requested data over the network. The producer 2 reads these messages from the completion queue.

In embodiments, the buffer of the completion queue may be implemented in the same memory space as used by the producer 2. In this case, the data structure of the completion queue buffer is preferably implemented close to the location of the target data to be processed by the work items in the address space of the memory where the target data is stored (which could be the same memory 10 as the outgoing work-queue buffer 4 or in principle could be a different memory, remembering that in embodiments each work item comprises a pointer to the data to be worked upon, and does not necessarily include the target data in the payload of the work item). The completion queue may be constrained to being within a predetermined range of the target data in the address space of the memory. It is generally more efficient to read data that are close by in memory due to mechanisms of the memory retrieval such as caching.

In some such embodiments, the completion queue may be implemented as a respective flag that is included in or adjacent to a memory address of the target data of each work item (i.e. at the same address as one of the bytes or words of the target data, or at a contiguous address). The producer 2 sends work items to a work queue, where they are serviced by the consumer (e.g. the producer 2 may be a CPU and the consumer 6 may be a network card, and the work request could be to send data over a network). The work item includes a pointer to the data to be processed (e.g. sent over the network) by the consumer 6. When the consumer 6 has serviced a work item (e.g. send the data over the network) it will notify the producer it has done so. Instead of sending these notifications back in a completely separate completion queue, the consumer 6 uses the pointer in the work item to assert a flag which is next to the data in the memory. This reduces the penalty incurred by the producer 2 checking memory to check whether work items are complete, because the producer (e.g. CPU) doesn't need to go to another region of memory to receive the completion. Also, the completion queue may be shared between multiple producers, which may cause extra latency and resource contention. In contrast, a separate completion flag next to the work item may be dedicated to a given thread. Further, the completion flag is more likely to be found in the cache (so it will result in a cache hit). For example, in embodiments the PCIe root complex is able to maintain cache coherence. So if there is a change on the cached data in the memory written by a PCIe-attached peripheral, the root complex will be able to update the cache with the newest change. Possibly as well the completion queue may be too large to fit into the closest cache space . This also means longer latency to read the completion information. The separate completion flag next to the producer work item can be easily fit into the working data set in the L1 cache.

A completion queue is just one possible example of a mechanism for reporting completion. Other possibilities could also be used, such as a direct signal from the consumer 6 to producer 2, or alternatively it is not essential for the consumer 6 to report completion at all.

Returning to the topic of the send-queue in the outgoing buffer 4, note that this does not need to use locks. If a thread increments the tail, but is descheduled before it initializes the slot, no requests past the slot will be processed by the hardware component (the hardware component processes slots in order), until the thread is scheduled back. This issue could be solved by issuing requests out of order and marking the slots consumed, but this would significantly complicate both the hardware and the software implementation of the queue.

In embodiments, to initialize the work queue, the producer 2 allocates memory for the buffer 4 with slots 12 and the head & tail fields 14, 16. It then writes physical addresses of the item buffer 4 and the head sequence number to the consumer's configuration registers. The buffer 4 and head field 14 are allocated in memory that is accessible to the hardware component over PCIe. The tail field 16 can reside in memory not accessible to the consumer 6.

The design as described above is based on threads (or more generally producing entities) polling the requests in a send-queue. This reduces latency and is less expensive than interrupts if the load is high. If the load is not high, the producer 2 might prefer to receive an interrupt. To support this, some embodiments may allow the producer 2 to set a register on the consumer 6, to set the consumer 6 to send interrupts after the work items are completed and work queue items consumed.

It will be appreciated that the above embodiments have been described by way of example only.

More generally, according to one aspect disclosed herein, there is provided electronic system comprising: a producer of a sequence of work items; a circular buffer for queueing the work items produced by the producer; and a consumer of the work items from the circular buffer. The circular buffer comprises a plural number of slots for queuing the work items in a queue with one slot as a head slot and another a tail slot, each slot in the circular buffer comprising a descriptor field for holding one work item and a sequence number field for holding a corresponding sequence number indicating how many work items came before in the sequence from the producer. The circular buffer further comprises a head field arranged to hold a head sequence number specifying the sequence number of the head slot, and a tail field arranged to hold a tail sequence number specifying the sequence number of the tail slot. The producer is configured so as, in order to enqueue a new work item into the queue, to increment the tail sequence number in the tail field, and write the new work item to the slot that was the tail slot prior to the increment of the tail sequence number. The consumer is configured to track, based on how many work items in the sequence the consumer has consumed from the queue so far, a next expected sequence number being the sequence number of the work item to consume next; the consumer being configured so as, in order to consume a next work item from the work queue, to poll the sequence number of the head slot to check whether it equals the expected sequence number, and on condition thereof consume said next work item.

In embodiments each of the slots in the circular buffer may have an associated index i, and in order to perform said write. The producer may be configured to determine the index i_w of the slot to which to perform the write by: i_w = S_tail modulo N, where S_tail is the sequence number of the slot that was the tail slot prior to the increment of the tail sequence number, and N is the number of slots in the circular buffer.

In embodiments, the consumer may be configured to perform the consuming of the next work item by: servicing the next work item from the descriptor field of the head slot, and incrementing the head sequence number to mark the head slot as consumed.

In embodiments, if each of the slots in the circular buffer has an associated index i, the circular buffer may be arranged to be initialized with a respective sequence number S in the sequence number field of each slot such that S modulo N ≠ i, where N is the number of slots in the circular buffer.

In embodiments, in order to perform said consuming of the next data item, the consumer may be configured to determine the index i_c of the slot from which to consume by: i_c = S_head modulo N, where S_head is the sequence number of the head slot prior to the increment of the head sequence number.

In embodiments, the consumer may be configured to consume a group of n next work items, n >1, by: servicing the n work items before incrementing the head sequence number, and then incrementing the head sequence number by n in a single increment.

In embodiments, the increment of the tail sequence number may be atomic (e.g. performed by a single machine code instruction).

In embodiments, the increment of the head sequence number may be atomic (e.g. performed by a single machine code instruction).

In embodiments, the producer may be configured to perform the increment of the tail sequence number by a compare-and-swap instruction which: takes as arguments I) an address of the tail slot, II) an old, expected value of the tail sequence number, and III) a new, incremented value; and atomically compares the old value with the value in the address, and if they are the same replace the value in the address with the new value .

In embodiments, the producer may comprise multiple producing entities, each being configured to produce and enqueue a respective one or more of the sequence of work items, by performing, for each of the respective one or more work items, a respective instance of said incrementing of the tail sequence number and then afterwards said writing of the work item. The incrementing of the tail sequence number thereby reserves, for the respective producing entity, the slot that was the tail slot prior to the increment.

In embodiments, each work item may comprise a pointer to a respective piece of target data in memory, to be operated upon by the work item. In such embodiments, the consumer may be configured to post, after having serviced a work item, an acknowledgment of completion to a memory location at or adjacent to an address of the respective target data in memory; and the producer may be configured to read the acknowledgement from said memory location.

In embodiments, the producer may be configured to check whether there is room in the circular buffer before the enqueuing of the new work item, and to perform the enqueuing on condition thereof. In this case producer may be configured to perform said check by: checking that the head sequence number in the head field + the number of slots in the circular buffer > the tail sequence number in the tail field.

In embodiments, the producer may be configured to determine whether said increment is successful, and to perform the write on condition thereof, but otherwise loop back to checking whether there is room in the circular buffer.

In embodiments the producer may comprise a CPU. In embodiments the consumer may comprise a peripheral.

In embodiments the circular buffer, producer and consumer may be connected to one another via a PCIe bus.

According to further aspects disclosed herein, there may be provided a method of operating the producer, consumer and/or buffer in accordance with any of the disclosed embodiments herein; or a computer program embodied on non-transitory computer-readable storage for performing operations of the producer, consumer and/or buffer in accordance with any embodiment.

Other variants or applications of the disclosed techniques may become apparent to a person skilled in the art once given the disclosure herein. The scope of the present disclosure is not limited by the disclosed embodiments by only by the accompanying claims.

## Claims

1. An electronic system comprising:
a producer of a sequence of work items;
a circular buffer for queueing the work items produced by the producer; and
a consumer of the work items from the circular buffer; wherein:
the circular buffer comprises a plural number of slots for queuing the work items in a queue with one slot as a head slot and another a tail slot, each slot in the circular buffer comprising a descriptor field for holding one work item and a sequence number field for holding a corresponding sequence number indicating how many work items came before in the sequence from the producer;
the circular buffer further comprises a head field arranged to hold a head sequence number specifying the sequence number of the head slot, and a tail field arranged to hold a tail sequence number specifying the sequence number of the tail slot;
the producer is configured so as, in order to enqueue a new work item into the queue, to increment the tail sequence number in the tail field, and write the new work item to the slot that was the tail slot prior to the increment of the tail sequence number; and
the consumer is configured to track, based on how many work items in the sequence the consumer has consumed from the queue so far, a next expected sequence number being the sequence number of the work item to consume next; the consumer being configured so as, in order to consume a next work item from the work queue, to poll the sequence number of the head slot to check whether it equals the expected sequence number, and on condition thereof consume said next work item.

2. The system of claim 1, wherein each of the slots in the circular buffer has an associated index i, and in order to perform said write, the producer is configured to determine the index i_w of the slot to which to perform the write by: i_w = S_tail modulo N, where S_tail is the sequence number of the slot that was the tail slot prior to the increment of the tail sequence number, and N is the number of slots in the circular buffer.

3. The computer system of claim 1 or 2, wherein the consumer is configured to perform the consuming of the next work item by: servicing the next work item from the descriptor field of the head slot, and incrementing the head sequence number to mark the head slot as consumed.

4. The system of claim 3, wherein:
each of the slots in the circular buffer has an associated index i;
the circular buffer is arranged to be initialized with a respective sequence number S in the sequence number field of each slot such that S modulo N ≠ i, where N is the number of slots in the circular buffer; and
in order to perform said consuming of the next data item, the consumer is configured to determine the index i_c of the slot from which to consume by: i_c = S_head modulo N, where S_head is the sequence number of the head slot prior to the increment of the head sequence number.

5. The system of claim 3 or 4, wherein the consumer is configured to consume a group of n next work items, n >1, by: servicing the n work items before incrementing the head sequence number, and then incrementing the head sequence number by n in a single increment.

6. The system of any preceding claim wherein the increment of the tail sequence number is atomic, or the system of claim 4 or 5 wherein the increment of the head sequence number is atomic.

7. The system of claim 6, wherein the producer is configured to perform the increment of the tail sequence number by a compare-and-swap instruction which:
takes as arguments I) an address of the tail slot, II) an old, expected value of the tail sequence number, and III) a new, incremented value; and
atomically compares the old value with the value in the address, and if they are the same replace the value in the address with the new value .

8. The system of any preceding claim, wherein the producer comprises multiple producing entities, each being configured to produce and enqueue a respective one or more of the sequence of work items, by performing, for each of the respective one or more work items, a respective instance of said incrementing of the tail sequence number and then afterwards said writing of the work item; the incrementing of the tail sequence number thereby reserving, for the respective producing entity, the slot that was the tail slot prior to the increment.

9. The system of any preceding claim, wherein:
each work item comprises a pointer to a respective piece of target data in memory, to be operated upon by the work item;
the consumer is configured to post, after having serviced a work item, an acknowledgment of completion to a memory location at or adjacent to an address of the respective target data in memory; and
the producer is configured to read the acknowledgement from said memory location.

10. The system of any preceding claim, wherein the producer is configured to check whether there is room in the circular buffer before the enqueuing of the new work item, and to perform the enqueuing on condition thereof; the producer being configured to perform said check by: checking that the head sequence number in the head field + the number of slots in the circular buffer > the tail sequence number in the tail field.

11. The system of claim 10, wherein the producer is configured to determine whether said increment is successful, and to perform the write on condition thereof, but otherwise loop back to checking whether there is room in the circular buffer.

12. The system of any preceding claim, wherein the producer comprises a CPU and the consumer comprises a peripheral.

13. The system of any preceding claim, wherein the circular buffer, producer and consumer are connected to one another via a PCIe bus.

14. A method comprising:
a producer producing a sequence of work items;
a circular buffer being used to queueing the work items produced by the producer; and
a consumer consuming the work items from the circular buffer; wherein:
the circular buffer comprises a plural number of slots for queuing the work items in a queue with one slot as a head slot and another a tail slot, each slot in the circular buffer comprising a descriptor field for holding one work item and a sequence number field for holding a corresponding sequence number indicating how many work items came before in the sequence from the producer;
the circular buffer further comprises a head field arranged to hold a head sequence number specifying the sequence number of the head slot, and a tail field arranged to hold a tail sequence number specifying the sequence number of the tail slot;
in order to enqueue a new work item into the queue, the producer increments the tail sequence number in the tail field, and writes the new work item to the slot that was the tail slot prior to the increment of the tail sequence number; and
based on how many work items in the sequence the consumer has consumed from the queue so far, the consumer tracks a next expected sequence number being the sequence number of the work item to consume next;
in order to consume a next work item from the work queue, the consumer polls the sequence number of the head slot to check whether it equals the expected sequence number, and on condition thereof consumes said next work item.

15. A computer program comprising code embodied on non-transitory computer readable storage and configured so as when run on one or more processors to perform the operations of the producer and/or consumer of claim 14, or the producer, consumer or system of any of claims 1 to 13.
